# EUROPEAN PATENT SPECIFICATION

(11) **EP 3 888 448 B1**
(45) Date of publication and mention of the grant of the patent: **08.11.2023**
(21) Application number: 20166884.5
(22) Date of filing: 30.03.2020
(51) Int. Cl.: A01G 9/02, A01G 9/029, B65D 65/46, B65D 1/26, B65D 25/10, B65D 85/52

(54) **BIODEGRADABLE CONTAINER FOR HORTICULTURE AND PROCESS FOR MANUFACTURE THEREOF**
BIOLOGISCH ABBAUBARER BEHÄLTER FÜR DEN GARTENBAU UND VERFAHREN ZU SEINER HERSTELLUNG
RÉCIPIENT BIODÉGRADABLE POUR L'HORTICULTURE ET SON PROCÉDÉ DE FABRICATION

(30) Priority: 26.03.2020 PT 2020116198
(43) Date of publication of application: 06.10.2021
(73) Proprietor: Universidade de Trás-os-Montes e Alto Douro, 5001-801 Vila Real (PT)
(72) Inventor: CORREA CABRAL, JUSSARA IZABEL, 5001-801 Vila Real (PT); GLENADEL BRAGA, FERNANDO, 5000-261 Vila Real (PT); CORREIA MARQUES, MARGARIDA MARIA, 5000-705 Vila Real (PT)
(74) Representative: Monteiro Alves, Inês

(56) References cited:
- DE-A1- 19 639 145
- US-A1- 2020 048 422

## Description

### Technical field

The present invention is related to a biodegradable container for horticulture produced from residues and the process of manufacture thereof.

### Background

Apart from the ability to contain the root system of a plant without inhibiting its growth, the containers for horticulture must present low cost. It is for this reason that, since the last century's 50's, the use of trays, vases and polyethylene or polypropylene plastic bags has increased exponentially, since the current petroleum fractioning processes, aimed at the production of fuels, generate a large quantity of petrochemical by-products that include the raw materials used in the synthesis of these polymers. Unfortunately, the plastic containers' low cost, allied to their thermoset nature, significantly limits their collection, reuse and recycling, ending up dispersed in the environment or deposited in landfills. Another disadvantage presented by this kind of polymeric material is its low natural biodegradability, proven during the last decade by several scientific studies that observed a growing presence of microplastics in the environment (Surampalli et al., 2018).

Although the literature contains the description of biodegradable containers for plants, manufactured from coconut fiber, agglomerated with polymeric materials ranging from synthetic additives such as polyvinyl alcohol (A. Wibmer and R. Walz in International Patent WO2001082680A1, 2001) to natural adhesives such as latex (J. V. De Wetering and S. Athalage in European Patent EP1938679A2, 2008), this material consists, in Europe, of an imported raw material, which contributes to uncompetitive unit costs. Additionally, the coconut fiber has been associated, in recent years, to deforestation in several exporting countries.

It is also possible to find in the literature the description of biodegradable containers manufactured from other materials, namely peats, cellulosic or vegetable residues partially decomposed or not, where the containers are molded exclusively by compression (W. E. Kusey and M. Yelanich in North American Patent US6408568B1, 2001), or are formed by agglomeration using organic plasticizer agents (C. Samet in International Patent WO2013168120A1, 2013). However, the containers produced through these methods present serious disadvantages, namely the reduction of mechanical resistance, due to exposure to irrigation water, aeration and root development problems, as well as slow degradation rates in the environment.

DE 196 39 145 A1 discloses another example of biodegradable container having a troncoconical structure.

### Summary

The present application is related to a biodegradable container for horticulture, having a troncoconical structure and consisting of three components:
- vegetable fibers with a lignin content between 60 and 85% (w/w) deriving from fresh grape stalks;
- mixtures of amylose and amylopectin corresponding to a starch content between 60 and 80% (w/w) and deriving from industrial processing residues of potatoes, sweet potatoes, carrots, maniocs or mixtures thereof;
- hydrophobic extracts containing between 10 and 20% (w/v) of simple lipids, waxes and terpenes, deriving from forestry by-products;
according to a proportion which may vary between 6.0:6.0:1.0 and 7.5:4.4:1.1.

In one embodiment the container has a wall thickness between 5 and 20 mm, a height to diameter ratio of 1:1, and an angle between 60 and 65°.

In another embodiment, the vegetable fibers result from fresh grape stems of the *Vitis* genus species.

In yet another embodiment the forestry by-products are derived from cluster pines, stone pines or mixtures thereof.

In one embodiment the container has an aperture with 1 cm in diameter on the smaller base, wall thickness between 5 and 10 mm, if the capacity is less than 5 liters, and of 20 mm, if the capacity is equal to or superior to 5 liters.

The present application also refers to a process for the production of a biodegradable container for horticulture comprising the following steps:
- First step:
   - grinding the grape stalks so that between 60 and 80% of the resulting material is composed of particles having a length equal to or less than 1 cm;
   - drying the particles at a temperature between 60 and 95°C until they reach a residual moisture content lower than 12% (w/w);
   - grinding the residues from industrial processing of potatoes, sweet potatoes, carrots, maniocs or mixtures thereof;
   - producing a suspension of these ground starch residues, in water, at a 1:3 proportion;
   - heating the suspension for 30 minutes, at a temperature between 60 and 75°C and under constant mechanical stirring;
- Second step:
   - adding the ground grape stalks to the aqueous suspension of starch residues, in a proportion varying between 1:4 and 3:7;
   - mechanically homogenizing the resulting semi-solid mixture;
   - molding the semi-solid mixture, while still hot, by applying it uniformly over the surface of a mold;
   - drying partially the mixture over the mold, at a temperature between 55 and 65°C, for 6 to 8 hours;
   - separating the container from the mold when the container presents a residual moisture lower than 40% (w/w);
   - drying again the container, in the previously described conditions, until it reaches a final moisture lower than 15% (w/w);
- Third step:
   - cooling the container by natural convection up to a temperature between 25 and 30°C;
   - applying from 40 to 50 ml of an alcoholic solution containing between 10 and 20% (w/v) of non-volatile organic solids at 20°C, obtained by solid-liquid extraction of forestry by-products derived from cluster pines or stone pines, such as the pine resin or rosin, on the inner and outer surface of the container;
   - drying again the container for 6 to 8 hours, at a temperature between 55 and 65°C, until it reaches a final moisture lower than 10% (w/w).

In one embodiment the alcoholic solution is a solution of methyl, ethyl or isopropyl alcohol.

In another embodiment, if the mixture of starch residues presents a soluble starch content lower than 60% (w/w), 0.5 to 5.0% (w/v) pectinase is added to the suspension.

In one embodiment the pH of the mixture with starch residues with a soluble starch content lower than 60% (w/w) is adjusted to a value between 5.0 and 6.0.

In yet another embodiment the stirring and heating of this suspension of alternative composition is maintained for 2 hours, to guarantee the conversion of at least 50% of pectin in soluble starch.

In one embodiment the molding is manual.

In another embodiment the molding is mechanical.

In yet another embodiment the molds are of vulcanized neutral silicone, with a conical shape, a height to base diameter ratio of 1:1, and an angle between the larger base and the side wall varying from 60 to 65°.

### General description

The present application describes the composition and main constructive characteristics of biodegradable containers for horticulture, manufactured from winemaking residues, agricultural and forestry by-products, according to specific proportions.

### Brief description of the figures

For an easier understanding of the present application figures are attached, which represent preferred embodiments that, however, do not intend to limit the technology herein disclosed.
Figure 1 shows a multi-view projection, comprised by an upper perspective projection (A), an upper view (B) and a lower perspective projection rotated 90° to the right (C) of the container described in the present application. This presents a troncoconical shape, with a wall thickness (1) between 5 and 20 mm, a height (2) to diameter (3) ratio of 1:1, and an angle (4) between 60 and 65°.
Figure 2 shows a perspective view of six containers containing plants, kept in a support composed by a large metallic mesh.

### Description of embodiments

With respect to the figures, some embodiments are now described in a more detailed manner, which do not intend however to limit the scope of the present application.

In order to contribute to the increase of the use of biodegradable containers in horticulture, a composition was developed that presents lower unitary cost, humidity resistance and controlled biodegradability superior to available alternatives. Additionally, the proposed formulation consists of a realistic approach to the elimination of several residues and by-products of food and forestry industries which present a negative impact on the environment.

### Containers:

The present invention refers to a biodegradable container comprised of three specific components: vegetable fibers with a lignin content between 60 and 85% (w/w) deriving from fresh grape stalks of *Vitis* genus species, mixtures of amylose and amylopectin corresponding to a starch content between 60 and 80% (w/w) and deriving from industrial processing residues of potatoes (*Solanum tuberosum* L.), sweet potatoes (*Ipomoea batatas)*, carrots (*Daucus carota*), maniocs (*Manihot esculenta*) or mixtures thereof, and extracts containing simple lipids, waxes and terpenes presenting a content between 10 and 20% (w/v), deriving from forestry by-products of cluster pines (*Pinus pinaster*), or mixtures thereof.

The proportion of these three components, which are mixed in three distinct steps, varies between 6.0:6.0:1.0 and 7.5:4.4:1.1, relatively to the vegetable fibers, starch mixture and extracts of lipids, waxes and terpenes, respectively.

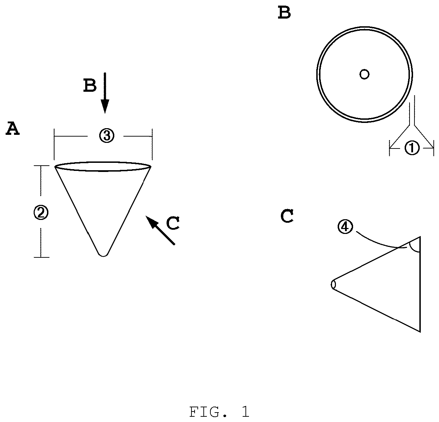

According to Figure 1, the container presents a troncoconical shape, with a wall thickness (1) between 5 and 20 mm, a height (2) to diameter (3) ratio of 1:1, and an angle (4) between 60 and 65°.

### Process for manufacture of container:

In the first step, fresh grape stalks are mechanically ground so that, 60 to 80% of the resulting material is composed of particles with a length equal or smaller than 1 cm, to be subsequently dried at a temperature between 60 and 95°C, until they reach a residual moisture content lower than 12% (w/w).

Simultaneously, the residue from the industrial processing of potatoes, sweet potatoes, carrots, maniocs or mixtures thereof, previously ground and represented mainly by peels or flours of these tubers and roots, are suspended in water, in a 1:3 proportion, the resulting suspension being heated for 30 minutes, under constant mechanical stirring, at a temperature between 60 and 75°C, so that the gelatinization process occurs.

In an alternative embodiment, where the starch residues present soluble starch contents lower than 60% (w/w), the pH of the suspension must be adjusted to a value between 5.0 and 6.0, and then 0.5 to 5.0% (w/v) pectinase must be added. In one embodiment, the pH is adjusted with a 10% (w/v) sodium hydroxide solution.

In this alternative embodiment, the stirring and heating of the suspension containing pectinase must be maintained for 2 hours, to guarantee the conversion of at least 50% of the pectin in soluble starch, so that the gelatinization of the mixture occurs.

In the second step of the process of manufacture of the container, the dried and ground grape stalk is added to the aqueous suspension described above, in a variable proportion between 1:4 and 3:7. The resulting mixture is mechanically homogenized to reach a consistence that is adequate for the molding process.

In one embodiment, the molding process is manual. In another embodiment, the molding process is mechanical.

In one embodiment, the molding step uses vulcanized neutral silicon molds having a conical shape and a height to base diameter ratio of 1:1 and an angle between 60 and 65°.

The moist mixture is uniformly applied over the mold, in a manner that only its upper extremity is not covered.

After the molding, the moist mixture that covers the mold is dried at a temperature between 55 and 65°C, preferably 60°C, for 6 to 8 hours.

When the container presents a residual moisture lower than 40% (w/w), it is manually separated from the mold and returns to the drying process, at the same temperature as that of the previous drying, for another 6 to 8 hours, until it reaches a final moisture lower than 15% (w/w).

In the third step of the manufacturing process described in the present application, the dry container is cooled by natural convection at a temperature between 25 and 30°C, being then applied, on the inner and outer surface, between 40 and 50 ml of an alcoholic solution containing 10 to 20% (w/v) of non-volatile organic solids at 20°C, obtained by solid-liquid extraction of forestry by-products derived from cluster pines or stone pines, such as the pine resin or rosin.

In one embodiment the alcoholic solution is a solution of methyl, ethyl or isopropyl alcohol.

In a preferred embodiment the alcoholic solution is a isopropyl alcohol solution.

Finally, the treated container is dried once more, at the same temperature as that of the previous drying, for another 6 to 8 hours, until it reaches a final moisture lower than 10% (w/w).

Subsequently to this last drying, the container weight is 7 to 8% (w/w) higher than that of the non-treated container and its water holding capacity is at least 70% less than that of the dried non-treated container.

As a result, in one embodiment, the container produced from the mold, once dried and treated, presents a troncoconical shape with a hole of 1 cm diameter in the smaller base, and a wall thickness between 5 and 10 mm, if the capacity is less than 5 liters, and of 20 mm, if the capacity is equal to or superior to 5 liters (Fig. 1).

Therefore, the manufacturing process of the biodegradable container comprises the following steps:
- First step:
   - grinding the grape stalks so that 60 to 80% of the resulting material is comprised of particles having a length equal to or less than 1 cm;
   - drying the particles at a temperature between 60 and 95°C until they reach a residual moisture content lower than 12% (w/w);
   - grinding the residues from industrial processing of potatoes, sweet potatoes, carrots, maniocs or mixtures thereof;
   - producing a suspension of these ground starch residues, in water, at a 1:3 proportion;
   - heating the suspension for 30 minutes, at a temperature between 60 and 75°C and under constant mechanical stirring;
- Second step:
   - adding the ground grape stalks to the aqueous suspension of starch residues, in a proportion varying between 1:4 and 3:7;
   - mechanically homogenizing the resulting semi-solid mixture;
   - molding the semi-solid mixture, while still hot, by applying uniformly over the surface of a mold;
   - drying partially the mixture over the mold, at a temperature between 55 and 65°C, for 6 to 8 hours;
   - separating the container from the mold when the container presents a residual moisture lower than 40% (w/w);
   - drying again the container, in the previously described conditions, until it reaches a final moisture lower than 15% (w/w);
- Third step:
   - cooling the container by natural convection up to a temperature between 25 and 30°C;
   - applying from 40 to 50 ml of an alcoholic solution containing between 10 and 20% (w/v) of non-volatile organic solids at 20°C, obtained by solid-liquid extraction of forestry by-products derived from cluster pines or stone pines, such as the pine resin or rosin, on the inner and outer surface of the container;
   - drying again the container for 6 to 8 hours, at a temperature between 55 and 65°C until it reaches a final moisture lower than 10% (w/w).

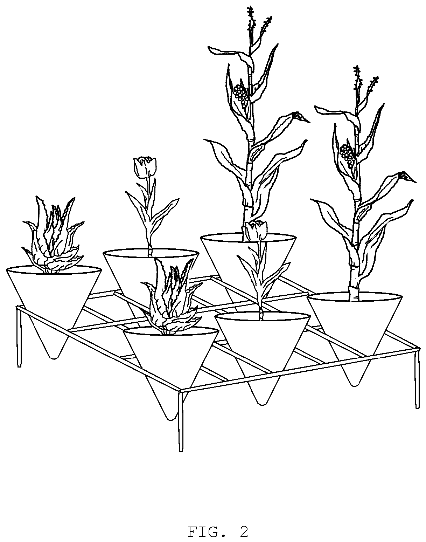

The constructive details described in the present application also take advantage of the roots' morphological plasticity in young plants, thus favoring, in a first phase, both the primary root (axial) and the secondary (lateral). As the roots develop, the primary root is gradually favored, which will have an important role in increasing the tolerance to several kinds of edaphic stress following the transplant to the soil. Additionally, the specific geometry described in Figure 1 allows a reduction in the amount of substrate per plant and requires the containers to be kept in a support during the development of the plants (Figure 2) . As a result, the aeration problems associated with the roots and the negative impact of moisture over the mechanical resistance of the containers are eliminated, allowing a superior controlled biodegradability.

Rao Y. Surampalli, Tian C. Zhang, Satinder Kaur Brar, Krishnamoorthy Hegde, Rama Pulichala and Mausam Verma. Chapter 8.7. Microplastics: An Emerging Threat to the Environment. In "Handbook of Environmental Engineering". New York: McGraw-Hill Education, 2018. ISBN 978-1-25-986022-5.

J. V. De Wetering and S. Athalage. 2008. Improved biodegradable planters. European Patent EP1938679A2.

A. Wibmer and R. Walz. 2001. Coconut fiber planting pot. International Patent WO2001082680A1.

C. Samet. 2013. Mixture for biodegradable articles. International Patent WO2013168120A1.

W. E. Kusey and M. Yelanich. 2001. Compressed blends of coconut coir pith and a non-coir/non-peat materials, and processes for the production thereof. North American Patent US6408568B1.

## Claims

1. Biodegradable container for horticulture having a troncoconical structure and **characterized by** being comprised of three components:
- vegetable fibers with a lignin content between 60 and 85% (w/w) deriving from fresh grape stalks;
- mixtures of amylose and amylopectin corresponding to a starch content between 60 and 80% (w/w) and deriving from industrial processing residues of potatoes, sweet potatoes, carrots, maniocs or mixtures thereof;
- hydrophobic extracts containing between 10 and 20% (w/v) of simple lipids, waxes and terpenes, deriving from forestry by-products;
according to a proportion which may vary between 6.0:6.0:1.0 and 7.5:4.4:1.1.

2. Container according to the preceding claim, **characterized by** a wall thickness between 5 and 20 mm, a height to diameter ratio of 1:1, and an angle between 60 and 65°.

3. Container according to claim 1, **characterized by** the vegetable fibers being derived from fresh grape stalks of *Vitis* genus species.

4. Container according to claim 1, **characterized by** the forestry by-products being derived from the cluster pines, stone pines or mixtures thereof.

5. Container according to claim 1, **characterized by** having an aperture with 1 cm in diameter on the smaller base, wall thickness between 5 and 10 mm, if the capacity is less than 5 liters, and of 20 mm, if the capacity is equal to or larger than 5 liters.

6. Process for the manufacture of a biodegradable container for horticulture described in any one of the preceding claims, **characterized by** comprising the following steps:
- First step:
- grinding the grape stalks so that between 60 and 80% of the resulting material is composed of particles having a length equal to or less than 1 cm;
- drying the particles at a temperature between 60 and 95°C until they reach a residual moisture content lower than 12% (w/w);
- grinding the residues from the industrial processing of potatoes, sweet potatoes, carrots, maniocs or mixtures thereof;
- producing a suspension of these ground starch residues, in water, at a 1:3 proportion;
- heating the suspension for 30 minutes, at a temperature between 60 and 75°C and under constant mechanical stirring;
- Second step:
- adding the ground grape stalks to the aqueous suspension of the starch residues, in a proportion varying between 1:4 and 3:7;
- mechanically homogenizing the resulting semi-solid mixture;
- molding the semi-solid mixture, while still hot, by applying uniformly over the surface of a mold;
- drying partially the mixture over the mold, at a temperature between 55 and 65°C, for 6 to 8 hours;
- separating the container from the mold when the container presents a residual moisture lower than 40% (w/w);
- drying again the container, in the previously described conditions, until it reaches a final moisture lower than 15% (w/w);
- Third step:
- cooling the container by natural convection up to a temperature between 25 and 30°C;
- applying from 40 to 50 ml of an alcoholic solution containing between 10 and 20% (w/v) of non-volatile organic solids at 20°C, obtained by solid-liquid extraction of forestry by-products derived from cluster pines or stone pines, such as the pine resin or rosin, on the inner and outer surface of the container;
- drying again the container for 6 to 8 hours, at a temperature between 55 and 65°C until it reaches a final moisture lower than 10% (w/w).

7. Process according to the preceding claim, **characterized by** the alcoholic solution being a solution of methyl, ethyl or isopropyl alcohol.

8. Process according to claim 6, **characterized in that** the mixture of starch residues presents a soluble starch content lower than 60% (w/w), 0.5 to 5.0% (w/v) of pectinase being added to the suspension.

9. Process according to the preceding claim, **characterized by** the pH of the mixture with starch residues with a soluble starch content lower than 60% (w/w) being adjusted to a value between 5.0 and 6.0.

10. Process according to claims 6 to 9, **characterized by** the stirring and heating of this suspension being maintained for 2 hours, to guarantee the conversion of at least 50% of the pectin in soluble starch.

11. Process according to claims 6 to 10, **characterized by** the molding being manual.

12. Process according to claims 6 to 10, **characterized by** the molding being mechanical.

13. Process according to claims 6 to 12, **characterized by** the molds being of vulcanized neutral silicone, with a conical shape, a height to base diameter ratio of 1:1, and an angle between the larger base and the side wall varying from 60 to 65°.

## Patentansprüche

1. Biologisch abbaubarer Behälter für den Gartenbau mit einer kegelstumpfförmigen Struktur und **dadurch gekennzeichnet, dass** er aus drei Komponenten besteht:
- Pflanzenfasern mit einem Ligningehalt zwischen 60 und 85 Gew.-%, die aus frischen Traubenstängeln gewonnen werden;
- Mischungen von Amylose und Amylopektin, die einem Stärkegehalt zwischen 60 und 80 Gew.-% entsprechen und aus Rückständen der industriellen Verarbeitung von Kartoffeln, Süßkartoffeln, Karotten, Maniok oder Mischungen daraus gewonnen werden;
- Hydrophobe Extrakte, die zwischen 10 und 20 % (w/v) einfacher Lipide, Wachse und Terpene aus forstwirtschaftlichen Nebenprodukten enthalten;
gemäß einem Anteil, der zwischen 6,0:6,0:1,0 und 7,5:4,4:1,1 variieren kann.

2. Behälter gemäß dem vorhergehenden Anspruch, **dadurch gekennzeichnet, dass** er eine Wanddicke zwischen 5 und 20 mm, ein Verhältnis von Höhe zu Durchmesser von 1:1 und einen Winkel zwischen 60 und 65° aufweist.

3. Behälter gemäß Anspruch 1, **dadurch gekennzeichnet, dass** die Pflanzenfasern aus frischen Traubenstängeln der Art der Gattung *Vitis* gewonnen werden.

4. Behälter gemäß Anspruch 1, **dadurch gekennzeichnet, dass** die forstwirtschaftlichen Nebenprodukte aus Strandkiefern, Pinien oder deren Mischungen gewonnen werden.

5. Behälter gemäß Anspruch 1, **dadurch gekennzeichnet, dass** er eine Öffnung von 1 cm Durchmesser auf der kleineren Grundfläche und eine Wanddicke zwischen 5 und 10 mm aufweist, wenn das Fassungsvermögen weniger als 5 Liter beträgt sowie von 20 mm aufweist, wenn das Fassungsvermögen 5 Liter oder mehr beträgt.

6. Verfahren zur Herstellung eines biologisch abbaubaren Behälters für den Gartenbau gemäß einem der vorhergehenden Ansprüche, **dadurch gekennzeichnet, dass** es die folgenden Schritte umfasst:
- Erster Schritt:
- Mahlen der Traubenstängel, so dass zwischen 60 und 80 % des entstandenen Materials aus Partikeln mit einer Länge von 1 cm oder weniger besteht;
- Trocknen der Partikel bei einer Temperatur zwischen 60 und 95 °C, bis sie einen Restfeuchtegehalt von weniger als 12 Gew.-% erreichen;
- Mahlen der Rückstände aus der industriellen Verarbeitung von Kartoffeln, Süßkartoffeln, Karotten, Maniok oder der Mischungen daraus;
- Herstellung einer Suspension aus diesen gemahlenen Stärkerückständen in Wasser in einem Verhältnis von 1:3;
- Erhitzen der Suspension für 30 Minuten bei einer Temperatur zwischen 60 °C und 75 °C unter ständigem mechanischem Rühren;
- Zweiter Schritt:
- Zugabe der gemahlenen Traubenstängel zu der wässrigen Suspension der Stärkerückstände in einem Verhältnis zwischen 1:4 und 3:7;
- Mechanisches Homogenisieren der daraus entstandenen halbfesten Mischung;
- Formgebung der halbfesten Mischung noch im heißen Zustand durch gleichmäßiges Auftragen auf die Oberfläche einer Form;
- teilweises Trocknen der Mischung über der Form bei einer Temperatur zwischen 55 und 65 °C für 6 bis 8 Stunden;
- Trennen des Behälters von der Form, wenn der Behälter eine Restfeuchte von weniger als 40 Gew.-% aufweist;
- erneutes Trocknen des Behälters unter den zuvor beschriebenen Bedingungen, bis er eine Endfeuchte von weniger als 15 Gew.-% erreicht;
- Dritter Schritt:
- Kühlen des Behälters durch natürliche Konvektion auf eine Temperatur zwischen 25 °C und 30 °C;
- Aufbringen von 40 bis 50 ml einer alkoholischen Lösung auf der Innen- und Außenfläche des Behälters bei 20 °C, die zwischen 10 und 20 % (w/v) an nicht flüchtigen organischen Feststoffen enthält, die durch Fest-Flüssig-Extraktion von forstwirtschaftlichen Nebenprodukten aus Strandkiefern oder Pinien, wie Pinienharz oder Kolophonium, gewonnen wird;
- erneutes Trocknen des Behälters für 6 bis 8 Stunden bei einer Temperatur zwischen 55 und 65 °C, bis er eine Endfeuchte von weniger als 10 Gew.-% erreicht.

7. Verfahren gemäß dem vorhergehenden Anspruch, **dadurch gekennzeichnet, dass** die alkoholische Lösung eine Lösung aus Methyl-, Ethyl- oder Isopropylalkohol ist.

8. Verfahren gemäß Anspruch 6, **dadurch gekennzeichnet, dass** das Gemisch aus Stärkerückständen einen löslichen Stärkegehalt von weniger als 60 Gew.-% aufweist, wobei der Suspension 0,5 bis 5,0 % (w/v) Pektinase zugesetzt werden.

9. Verfahren gemäß dem vorhergehenden Anspruch, **dadurch gekennzeichnet, dass** der pH-Wert der Mischung mit Stärkerückständen mit einem löslichen Stärkegehalt von weniger als 60 Gew.-% auf einen Wert zwischen 5,0 und 6,0 eingestellt wird.

10. Verfahren gemäß den Ansprüchen 6 bis 9, **dadurch gekennzeichnet, dass** das Rühren und Erhitzen dieser Suspension 2 Stunden lang durchgeführt werden, um die Umwandlung von mindestens 50 % des Pektins in lösliche Stärke zu gewährleisten.

11. Verfahren gemäß den Ansprüchen 6 bis 10, **dadurch gekennzeichnet, dass** die Formgebung manuell erfolgt.

12. Verfahren gemäß den Ansprüchen 6 bis 10, **dadurch gekennzeichnet, dass** die Formgebung mechanisch erfolgt.

13. Verfahren gemäß den Ansprüchen 6 bis 12, **dadurch gekennzeichnet, dass** die Formen aus vulkanisiertem neutralem Silikon mit konischer Form bestehen, ein Verhältnis von Höhe zu Basisdurchmesser von 1:1 und einen Winkel zwischen der größeren Grundfläche und der Seitenwand von 60 bis 65° aufweisen.

## Revendications

1. Récipient biodégradable pour l'horticulture ayant une structure tronconique et **caractérisé en ce qu'**il est constitué de trois éléments :
- des fibres végétales à teneur en lignine comprise entre 60 et 85 % (p/p) provenant de rafles de raisins frais ;
- des mélanges d'amylose et d'amylopectine correspondant à une teneur en amidon comprise entre 60 et 80 % (p/p) et provenant de résidus de transformation industrielle de pommes de terre, de patates douces, de carottes, de maniocs ou de leurs mélanges ;
- des extraits hydrophobes contenant entre 10 et 20 % (p/v) de lipides simples, de cires et de terpènes, provenant de sous-produits forestiers ;
selon une proportion qui peut varier entre 6,0:6,0:1,0 et 7,5:4,4:1,1.

2. Récipient selon la revendication précédente, **caractérisé par** une épaisseur de paroi comprise entre 5 et 20 mm, un rapport hauteur sur diamètre de 1:1, et un angle compris entre 60 et 65°.

3. Récipient selon la revendication 1, **caractérisé en ce que** les fibres végétales proviennent de rafles de raisin frais de l'espèce du genre *Vitis.*

4. Récipient selon la revendication 1, **caractérisé en ce que** les sous-produits forestiers proviennent de pins maritimes, de pins parasols ou de leurs mélanges.

5. Récipient selon la revendication 1, **caractérisé en ce qu'**il présente une ouverture de 1 cm de diamètre sur la plus petite base, une épaisseur de paroi comprise entre 5 et 10 mm, si la capacité est inférieure à 5 litres, et de 20 mm, si la capacité est égale ou supérieure à 5 litres.

6. Procédé de fabrication d'un récipient biodégradable pour l'horticulture selon l'une quelconque des revendications précédentes, **caractérisé en ce qu'**il comprend les étapes suivantes :
- Première étape :
- le broyage des rafles de raisin de sorte qu'entre 60 et 80 % de la matière obtenue soit composée de particules ayant une longueur égale ou inférieure à 1 cm ;
- le séchage des particules à une température comprise entre 60 et 95 °C jusqu'à ce qu'elles atteignent un taux d'humidité résiduelle inférieur à 12 % (p/p) ;
- le broyage des résidus de la transformation industrielle des pommes de terre, des patates douces, des carottes, des maniocs ou de leurs mélanges ;
- la production d'une suspension de ces résidus d'amidon broyés, dans de l'eau, à une proportion de 1:3 ;
- le chauffage de la suspension pendant 30 minutes, à une température comprise entre 60 et 75 °C et sous agitation mécanique constante ;
- Deuxième étape :
- l'ajout des rafles de raisin broyées à la suspension aqueuse des résidus d'amidon, dans une proportion variant entre 1:4 et 3:7 ;
- L'homogénéisation mécanique du mélange semi-solide résultant ;
- le moulage du mélange semi-solide, lorsqu'il est encore chaud, par application uniforme sur la surface d'un moule ;
- le séchage partiel du mélange sur le moule, à une température comprise entre 55 et 65 °C, pendant 6 à 8 heures ;
- la séparation du récipient du moule lorsque le récipient présente une humidité résiduelle inférieure à 40 % (p/p) ;
- le séchage à nouveau du récipient, dans les conditions décrites précédemment, jusqu'à ce qu'il atteigne une humidité finale inférieure à 15 % (p/p) ;
- Troisième étape :
- le refroidissement du récipient par convection naturelle jusqu'à une température comprise entre 25 et 30 °C ;
- l'application de 40 à 50 ml d'une solution alcoolique contenant entre 10 et 20 % (p/v) de solides organiques non volatils à 20 °C, obtenue par extraction solide-liquide de sous-produits forestiers provenant de pins maritimes ou de pins parasols, tels que la résine ou la colophane de pin, sur les surfaces intérieure et extérieure du récipient ;
- le séchage à nouveau du récipient pendant 6 à 8 heures, à une température comprise entre 55 et 65 °C jusqu'à ce qu'il atteigne une humidité finale inférieure à 10 % (p/p).

7. Procédé selon la revendication précédente, **caractérisé en ce que** la solution alcoolique est une solution d'alcool méthylique, éthylique ou isopropylique.

8. Procédé selon la revendication 6, **caractérisé en ce que** le mélange de résidus d'amidon présente une teneur en amidon soluble inférieure à 60 % (p/p), 0,5 à 5,0 % (p/v) de pectinase étant ajouté à la suspension.

9. Procédé selon la revendication précédente, **caractérisé en ce que** le pH du mélange avec des résidus d'amidon à teneur en amidon soluble inférieure à 60 % (p/p) est ajusté à une valeur comprise entre 5,0 et 6,0.

10. Procédé selon les revendications 6 à 9, **caractérisé en ce que** l'agitation et le chauffage de cette suspension sont maintenus pendant 2 heures, afin de garantir la conversion d'au moins 50 % de la pectine en amidon soluble.

11. Procédé selon les revendications 6 à 10, **caractérisé en ce que** le moulage est manuel.

12. Procédé selon les revendications 6 à 10, **caractérisé en ce que** le moulage est mécanique.

13. Procédé selon les revendications 6 à 12, **caractérisé en ce que** les moules sont en silicone neutre vulcanisé, avec une forme conique, un rapport hauteur sur diamètre base de 1:1, et un angle entre la grande base et la paroi latérale variant de 60 à 65°.
